# EUROPEAN PATENT SPECIFICATION

(11) **EP 0 478 616 B1**
(45) Date of publication and mention of the grant of the patent: **03.11.1993**
(21) Application number: 90909158.9
(22) Date of filing: 20.06.1990
(51) Int. Cl.: G06F 3/06

(54) **Method and apparatus for data store connection**
Verfahren und Vorrichtung für Datenspeicherverbindung
Procédé et dispositif pour connexion de memoire de donnees

(30) Priority: 21.06.1989 GB 8914253
(43) Date of publication of application: 08.04.1992
(73) Proprietor: PEREX LIMITED, Reading, Berkshire RG2 0EA (GB)
(72) Inventor: WALKER, Barry, John 28 Mayhew Crescent, Bucks HP13 6BX (GB)
(74) Representative: Bowles, Sharon Margaret
(86) International application number: GB9000950
(87) International publication number: WO9016025

(56) References cited:
- EP-A- 0 240 749
- Radio Fernsehen Elektronik, volume 38. no. 4, April 1989, (Berlin, DE); H. Stuhec et al.: "Universelle Parallelschnittstelle für A 7100", pages 214-215.
- Microprocessing and Microprogramming, volume 17, no. 3, March 1986, (Amsterdam, NL), P. Lippitsch et al.: "MFD2 - Using serial I7O for a low cost flexible disk interface", pages 153-157.

## Description

This invention relates to connection of data storage systems to computers and in particular, but not exclusively, to connection of hard disk drives to microcomputers.

With the expansion of use of microcomputers and integrated computer systems for business and home use there is a growing demand for transportable data storage devices with greater capacity than floppy disks, and in particular for transportable hard disks. It would be convenient to be able simply to disconnect a hard disk from a computer at one location and be able to connect it to any other computer with a compatible operating system. However at present there is no simple way of providing this facility without specialised modification of the structure of the computers between which disk transfer is desired.

Radio Fernschen Elektronic, Volume 38, No. 4, April 1989, (Berlin, DE) M. Stuhec et al: 'Universelle Parallel-schniftstelle für A7100', pages 214 to 215, describes a parallel interface for an A 1700 computer in which data bytes are input to an intermediate input memory then output to the computer in a series of half bytes.

The present invention is directed towards providing simple connection of data storage devices such as hard disks through standard ports not necessarily originally configured for connection to such a data storage device.

Accordingly the invention provides an interface system for connecting a data storage device to a computer port, the data storage device having a greater bit multiplicity than the input data lines available on the computer port, the interface system comprising means for reading stored multibit data to a first memory device and means for reading the multibit data from the first memory device in a sequence of lesser bit number data segments for input along the input data lines of the computer port characterised in that the interface system utilises a port on the computer configured for output data and comprises means for utilising status lines of said computer port as input data lines and data is transferred to and from the data storage device under the control of the computer.

Preferably the apparatus also includes means for outputting data along output lines of the port in lesser bit number data segments and means for combining the output data segments into said multibit format.

The invention also provides a method of connecting a data storage device to a computer port when the data storage device has a greater number of output data lines than the input data lines available on the computer port, the method comprising dividing stored multibit data into a series of data segments and sequentially reading the data segments into the computer characterised in that the status lines of the computer port, which is configured for output data, are utilised as input data lines and the multibit data is divided into a series of segments of number at most equal to the number of status lines and data is transferred to and from the data storage device under the control of the computer.

Preferably data is output from the computer in a series of four bit nibbles and combined to correspond to the bit format of the storage device.

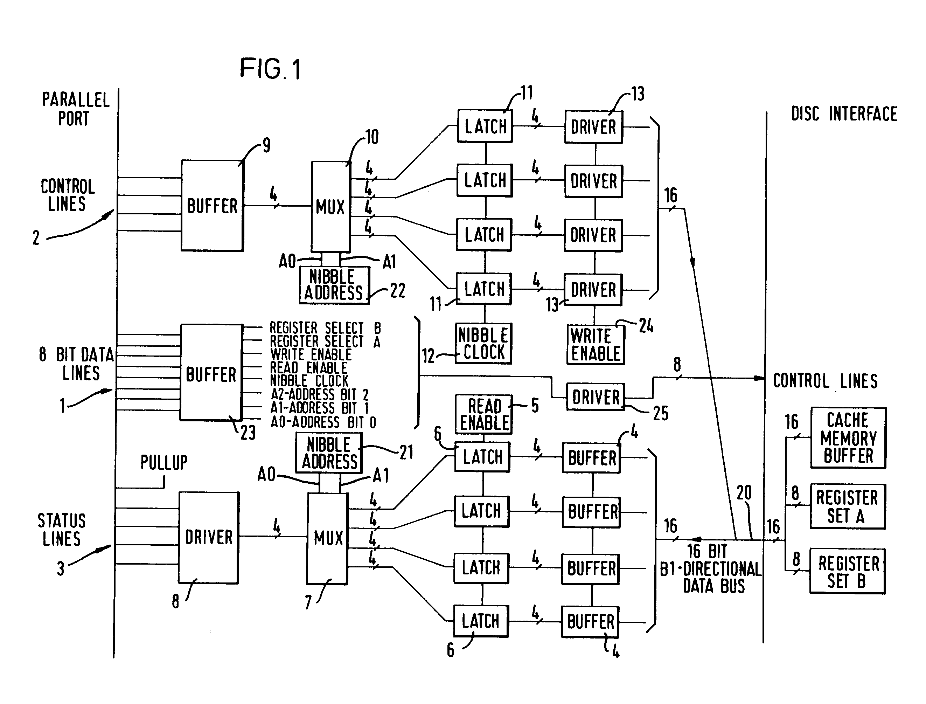

The invention is now described by way of example with reference to the accompanying drawing in which Figure 1 shows a block diagram of an interface circuit according to a preferred embodiment of the invention.

One of the principal objects of the present invention is to provide the ability simply to plug in an additional hard disk drive to existing computers, especially microcomputers, or PC's without requiring structural modification of the computer hardware. One way to achieve this is to connect the disk drive through a standard serial interface, but this would result in very slow communication from computer to disk drive. On other computers there may be free parallel ports, but the configuration of these may vary from computer to computer. In the preferred embodiment of the invention it is therefore proposed to utilise a parallel printer interface port that is of standard configuration and is provided on virtually every PC, and indeed on many other computers. Figure 1 shows schematically an embodiment of an interface circuit according to the invention designed to overcome the problem that a parallel printer port does not have the appropriate lines for connection to a hard disk drive. The left hand side of Figure 1 shows the standard parallel printer port lines which are: eight output data lines 1 for communicating from computer to printer, four control lines 2 for communicating instructions from the computer to the printer and five status or reply lines 3 along which the printer provides status signals to the computer. A 16 bit disk drive, the output interface of which is represented by the right hand side of Figure 1, communicates to a computer along 16 bit bidirectional lines and requires further status and control lines.

In the embodiment four of the status lines 3 of the parallel printer interface port, which permit communication to the computer, are utilised as the input for all 16 lines from the disk to the computer and the four control lines 2 are used for all 16 bits from computer back to the disk drive. The 8 bit parallel printer port data lines 1 from the computer are used to send controls from the computer to the interface and disk drive.

In order to handle the 16 bit lines from the disk the lines are read from a 16 bit bidirectional data bus 20 from the disk interface directly into four parallel buffers 4 which are adapted to clean the signals, and from each of the buffers 4 directly into a respective storage latch 6. Four lines run from the bus 20 to each of the buffers 4 and four lines from each buffer 4 to its respective latch 6. A read clock 5 controls the series of latches 6 to read out the four lines from each of the latches in turn so that instead of 16 parallel bit lines there is a series of four 4 bit nibbles (each nibble originating from one of the latches 6) entering a multiplexer 7. At the multiplexer each nibble is given an address by a 2 binary bit nibble addresser 21. The addressed nibbles are then output on four lines to a driver 8 where the signals are again conditioned before being input to the computer along the status lines 3.

Writing to the disk is achieved by outputting data in 4 bit nibbles along control lines 2 into a buffer 9 where the signal is cleaned before being output on four lines to a mutiplexer 10. The 16 bit word required by the disk drive is assembled by outputting the nibbles to each of four 4 bit memory latches 11 in sequence, each nibble being given a nibble address by nibble addresser 22. A nibble clock 12 latches each respective 4 bit nibble in turn in accordance with its address out of the latches 11 so that the four nibbles are simultaneously output first to a corresponding driver 13 for pulse processing and then the 16 bit word is output on 16 lines (four from each driver 13) to the disk data bus 20.

In addition to the provision of the nibble interface the operating system (for example for most current PC's DOS) software of the computer is modified so that it can recognise that a disk drive is connected to the parallel printer port. For example in a DOS system the configuration file CONFIG.SYS that is stored on the system disk or bootable drive can be modified by inclusion of a driver program that controls the picking up and sending out of data in nibbles that are handled by the interface. Similar modifications may be made to other operating systems.

The 8 bit data lines 1 are connected to control the interface via the modified system software. The control signals are supplied on lines 1 to a buffer 23, also for signal cleaning, and via eight lines and a driver 25 to the disk drive. Three of the eight lines 1 are used to control the addresses to the disk drive and two of these lines also control the nibble addressers 21 and 22. A fourth line controls the nibble clock 12, fifth and sixth lines control the read and write clocks 5 and 24 and seventh and eighth lines control the disk drive.

Read heads on hard disks are at present generally of a mechanical nature, and it is not possible simply to control the read rate, with the result that data input to the data bus 20 may be too fast to be read by the computer via the parallel port. For this reason it is necessary to have some means for controlling the read rate of data from the disk, and for this purpose a cache memory buffer is conveniently used. The cache memory buffer may be fabricated along with the hard disk or be part of the interface circuit.

The interface circuit may be made to be compatible with existing hard disk packages and is preferably packaged with a hard disk. For transportation safety it is desirable for the package to have a good shock rating so that handling and even dropping does not cause damage. For this purpose the disk and interface may be mounted in a package using shock absorbing mountings, for example resilient mountings. A compact package is also desirable from the ease of transportation point of view but relative confinement also presents heating problems. A particularly preferred package includes a liquid heat sink such as a fluorinated liquid heat sink which has high thermal convection properties. An added advantage of the liquid heat sink is that it also provides additional shock absorbancy.

The embodiment described may be modified for use with differing numbers of data storage lines and port lines, with different bit segment sizes. In the extreme case the data may be input serially a bit at a time. Alternative data storage devices other than hard disks may also be connected in an analogous manner. The demountable, compact nature of the system is of significant importance not only for flexibility and transportation but also for security purposes enabling simple demounting of sensitive information and for establishment of back up records.

## Claims

1. An interface system for connecting a data storage device to a computer port, the data storage device having a greater bit multiplicity than the input data lines available on the computer port, the interface system comprising means (20, 4) for reading stored multibit data to a first memory device (6) and means (7) for reading the multibit data from the first memory device (6) in a sequence of lesser bit number data segments for input along the input data lines of the computer port characterised in that the interface system utilises a port on the computer configured for output data and comprises means for utilising status lines (3) of said computer port as input data lines and data is transferred to and from the data storage device under the control of the computer.

2. An interface system according to claim 1 further characterised in that data is output from the computer also in a sequence of data segments having a lower bit multiplicity than the multibit data and further comprises means (10, 11, 13) for combining the output data segments to stored multibit data format.

3. An interface system according to claim 2 further characterised in that data is output via control lines (2) of the computer port.

4. An interface system according to claim 2 or claim 3 further characterised in that the means for combining the output data segments comprises a second memory device (11).

5. An interface system according to claim 2 or claim 3 further characterised in that the means for combining the output data segments comprises a plurality of parallel memories (11).

6. An interface system according to any preceding claim further characterised in that the first memory device comprises a plurality of parallel memories (6).

7. An interface system according to any preceding claim further characterised in that the means (7) for reading the multibit data from the first memory device (6) comprises means for enabling control of the read rate.

8. An interface system according to claim 7 further characterised in that the means for enabling control of the read rate comprises a cache memory.

9. An interface system according to any preceding claim further characterised in that the computer port is a parallel printer port.

10. An interface system according to any preceding claim further characterised in that software control of the data storage device and interface system is output along lines adapted to be connected to the data lines of the computer port.

11. An interface system according to any preceding claim further characterised in that the multibit data is input from a hard disc.

12. An interface system according to any preceding claim further characterised in that the multibit data is 16 bits and the input and output data segments are 4 bit nibbles.

13. A method of connecting a data storage device to a computer port when the data storage device has a greater number of output data lines than the input data lines available on the computer port, the method comprising dividing stored multibit data into a series of data segments and sequentially reading the data segments into the computer characterised in that the status lines (3) of the computer port, which is configured for output data, are utilised as input data lines and the multibit data is divided into a serie of segments of number at most equal to the number of status lines and data is transferred to and from the data storage device under the control of the computer.

14. A method according to claim 13 in which data is output from the computer in a serie of data segments and combined to correspond to the data bit format of the data storage device.

15. A method according to claim 13 or claim 14 in which the computer port is a parallel printer port.

16. A method according to any of claims 13 to 15 in which software control of the data storage device is output along data lines (1) of the computer port.

17. A method according to any of claims 13 to 16 in which data segments are output via the control lines (2) of the computer port.

18. A method according to any of claims 13 to 17 in which the read rate of data from the storage device is controlled.

## Patentansprüche

1. Schnittstellensystem zum Verbinden einer Datenspeichereinrichtung mit einem Computerport, wobei die Datenspeichereinrichtung eine größere Bitmultiplizität als die am Computerport verfügbaren Eingangsdatenleitungen aufweist und das Schnittstellensystem eine Einrichtung (20, 4) zum Einlesen gespeicherter Mehrbitdaten in eine erste Speichereinrichtung (6) und eine Einrichtung (7) zum Auslesen der Mehrbitdaten aus der ersten Speichereinrichtung (6) in einer Folge von Datensegmenten mit einer geringeren Bitanzahl zur Eingabe über die Eingangsdatenleitungen des Computerports aufweist, dadurch gekennzeichnet, daß das Schnittstellensystem einen am Computer befindlichen Port, der zur Datenausgabe konfiguriert ist, verwendet und eine Einrichtung zum Verwenden von Zustandsleitungen (3) des Computerports als Eingangsdatenleitungen umfaßt und Daten zu der Datenspeichereinrichtung bzw. von dieser unter der Steuerung des Computers übertragen werden.

2. Schnittstellensystem nach Anspruch 1, weiter dadurch gekennzeichnet, daß Daten von dem Computer auch in einer Folge von Datensegmenten mit einer niedrigeren Bitmultiplizität als die Mehrbitdaten ausgegeben werden und weiter aufweisend eine Einrichtung (10, 11, 13) zum Kombinieren der Ausgangsdatensegmente in ein Format der gespeicherten Mehrbitdaten.

3. Schnittstellensystem nach Anspruch 2, weiter dadurch gekennzeichnet, daß Daten über Steuerleitungen (2) des Computerports ausgegeben werden.

4. Schnittstellensystem nach Anspruch 2 oder 3, weiter dadurch gekennzeichnet, daß die Einrichtung zum Kombinieren der Ausgangsdatensegmente eine zweite Speichereinrichtung (11) aufweist.

5. Schnittstellensystem nach Anspruch 2 oder 3, weiter dadurch gekennzeichnet, daß die Einrichtung zum Kombinieren der Ausgangsdatensegmente eine Vielzahl paralleler Speicher (11) aufweist.

6. Schnittstellensystem nach einem der vorhergehenden Ansprüche, weiter dadurch gekennzeichnet, daß die erste Speichereinrichtung eine Vielzahl paralleler Speicher (6) aufweist.

7. Schnittstellensystem nach einem der vorhergehenden Ansprüche, weiter dadurch gekennzeichnet, daß die Einrichtung (7) zum Auslesen der Mehrbitdaten aus der ersten Speichereinrichtung (6) eine Einrichtung aufweist, die eine Steuerung der Lesegeschwindigkeit ermöglicht.

8. Schnittstellensystem nach Anspruch 7, weiter dadurch gekennzeichnet, daß die Einrichtung, die die Steuerung der Lesegeschwindigkeit ermöglicht, einen Cachespeicher aufweist.

9. Schnittstellensystem nach einem der vorhergehenden Ansprüche, weiter dadurch gekennzeichnet, daß der Computerport ein Paralleldruckerport ist.

10. Schnittstellensystem nach einem der vorhergehenden Ansprüche, weiter dadurch gekennzeichnet, daß eine Softwaresteuerung der Datenspeichereinrichtung und des Schnittstellensystems über mit den Datenleitungen des Computerports verbindbaren Leitungen ausgegeben wird.

11. Schnittstellensystem nach einem der vorhergehenden Ansprüche, weiter dadurch gekennzeichnet, daß die Mehrbitdaten von einer Festplatte eingegeben werden.

12. Schnittstellensystem nach einem der vorhergehenden Ansprüche, weiter dadurch gekennzeichnet, daß die Mehrbitdaten 16 Bits umfassen und die Eingangs- und Ausgangsdatensegmente 4-Bit-Worte sind.

13. Verfahren zum Verbinden einer Datenspeichereinrichtung mit einem Computerport, falls die Datenspeichereinrichtung eine größere Anzahl von Ausgangsdatenleitungen als die am Computerport verfügbaren Eingangsdatenleitungen aufweist, wobei das Verfahren ein Teilen gespeicherter Mehrbitdaten in eine Reihe von Datensegmenten und ein sequentielles Einlesen der Datensegmente in den Computer einschließt, dadurch gekennzeichnet, daß die Zustandsleitungen (3) des Computerports, der für Ausgangsdaten konfiguriert ist, als Eingangsdatenleitungen verwendet werden und die Mehrbitdaten in eine Reihe von Segmenten mit einer Anzahl, die höchstens der Anzahl der Zustandsleitungen entspricht, geteilt und die Daten zu der Datenspeichereinrichtung bzw. von dieser unter der Steuerung des Computers übertragen werden.

14. Verfahren nach Anspruch 13, bei dem Daten vom Computer in einer Reihe von Datensegmenten ausgegeben und so kombiniert werden, daß sie dem Datenbitformat der Datenspeichereinrichtung entsprechen.

15. Verfahren nach Anspruch 13 oder 14, bei dem der Computerport ein Paralleldruckerport ist.

16. Verfahren nach einem der Ansprüche 13 bis 15, bei dem eine Softwaresteuerung der Datenspeichereinrichtung über Datenleitungen (1) des Computerports ausgegeben wird.

17. Verfahren nach einem der Ansprüche 13 bis 16, bei dem die Datensegmente über die Steuerleitungen (2) des Computerports ausgegeben werden.

18. Verfahren nach einem der Ansprüche 13 bis 17, bei dem die Lesegeschwindigkeit der Daten der Speichereinrichtung gesteuert wird.

## Revendications

1. Système d'interface pour connecter un dispositif de stockage de données à une entrée d'ordinateur, le dispositif de stockage de données ayant un plus grand nombre de bits que les lignes d'entrées disponibles sur l'ordinateur, ledit système d'interface comportant des moyens (20, 4) pour introduire les données multi-bits stockées dans un premier dispositif de mémoire (6) et des moyens (7) pour lire les données multi-bits à partir de ce premier dispositif de mémoire (6) en une séquence de segments de données en moins grands nombres de bits pour les entrées dans les lignes d'entrée d'information de l'ordinateur, caractérisé en ce que le système d'interface utilise une entrée de l'ordinateur configurée comme sortie de données et comporte des moyens pour utiliser des lignes d'état (3) de ladite entrée d'ordinateur comme ligne d'entrée de données et les données sont transférées vers le dispositif de stockage et à partir de celui-ci sous le contrôle de l'ordinateur.

2. Système d'interface selon la revendication 1, caractérisé en outre en ce que les données sont sorties de l'ordinateur également en une séquence de segments de donnée ayant un nombre de bits plus faibles que les données multi-bits et comportant de plus des moyens (10, 11, 13) pour combiner en sortie les segments de données avec des données stockées en format multi-bits.

3. Système d'interface selon la revendication 2, caractérisé en outre en ce que les données sont sorties via des lignes de contrôle (2) de la sortie de l'ordinateur.

4. Système d'interface selon l'une quelconque des revendications 2 ou 3, caractérisé en outre en ce que les moyens pour combiner les segments de données de sorties comportent un second dispositif à mémoire (11).

5. Système d'interface selon l'une quelconque des revendications 2 ou 3, caractérisé en outre en ce que les moyens pour combiner les segments de données de sorties comportent une pluralité de mémoires en parallèle (11).

6. Système d'interface selon l'une quelconque des revendications précédentes, caractérisé en outre en ce que le premier dispositif à mémoire comporte une pluralité de mémoires en parallèle (6).

7. Système d'interface selon l'une quelconque des revendications précédentes, caractérisé en outre en ce que les moyens (7) pour lire les données multi-bits dans le premier dispositif à mémoire (6) comportent des moyens pour permettre le contrôle du taux de lecture.

8. Système d'interface selon la revendication 7, caractérisé en outre en ce que les moyens pour permettre le contrôle du taux de lecture comportent une mémoire tampon.

9. Système d'interface selon l'une quelconque des revendications précédentes, caractérisé en outre en ce que l'entrée de l'ordinateur est une entrée d'imprimante parallèle.

10. Systéme d'interface selon l'une quelconque des revendications précédentes, caractérisé en outre en ce qu'un contrôle du logiciel du dispositif de stockage de données et du système d'interface est sorti sur les lignes adaptées pour être connecté sur les lignes de données de l'entrée de l'ordinateur.

11. Système d'interface seton l'une quelconque des revendications précédentes, caractérisé en outre en ce que les données multi-bits sont introduites à partir d'un disque dur.

12. Système d'interface selon l'une quelconque des revendications précédentes, caractérisé en outre en ce que les données multi-bits sont des 16 bits et que les segments de données d'entrée et de sortie sont des quartets de quatre bits.

13. Procédé pour connecter un dispositif de stockage de données à une entrée d'ordinateur lorsque le dispositif de stockage possède un plus grand nombre de lignes de sortie que le nombre de lignes d'entrée de données disponible sur l'entrée de l'ordinateur, ledit procédé comportant une division des données multi-bits stockées en une série de segments de données et une introduction séquentielle des segments de données dans l'ordinateur, caractérisé en ce que des lignes d'état (3) de l'entrée de l'ordinateur qui a une configuration de sortie de données sont utilisées comme ligne d'entrée de données et les données multi-bits sont divisées en une série de segments en nombre au plus égal au nombre de lignes d'état et les données sont transferées vers le dispositif de stockage de données et à partir de celui-ci sous le contrôle de l'ordinateur.

14. Procédé selon la revendication 13, dans lequel les données sont sorties de l'ordinateur en une série de segment de données et combinées pour correspondre au format de bits de données du dispositifs de stockage de données.

15. Procédé selon l'une quelconque des revendications 13 ou 14, dans lequel l'entrée de l'ordinateur est une entrée d'imprimante parallèle.

16. Procédé selon l'une quelconque des revendications 13 à 15, dans lequel un contrôle du logiciel du dispositif de stockage de données est sorti sur les lignes de données (1) de l'entrée de l'ordinateur.

17. Procédé selon l'une quelconque des revendications 13 à 16, dans lequel des segments de données sont sortis via les lignes de contrôle (2) de l'entrée de l'ordinateur.

18. Procédé selon l'une quelconque des revendications 13 à 17, dans lequel le taux de lecture des données à partir du dispositif de stockage est contrôlé.
